# EUROPEAN PATENT APPLICATION

(11) **EP 2 754 920 A1**
(43) Date of publication of application: **16.07.2014**
(21) Application number: 14150290.6
(22) Date of filing: 07.01.2014
(51) Int. Cl.: F16G 11/02, F16G 11/10

(54) **Fastening apparatus**

(30) Priority: 11.01.2013 HK 13100451
(71) Applicant: Ching Fung Apparel Accessories Co. Ltd., Kowloon, Hong Kong (CN)
(72) Inventor: Leung Kwok Yun, Gary, Kowloon, Hong Kong (HK)
(74) Representative: Boult Wade Tennant

(57) **Abstract**

A fastening apparatus (20) designed to provide a simple, fast and yet inexpensive way to tying two objects together is disclosed. The fastening apparatus comprises a coupling device (24) with at least one fringe (28) extended outwardly from its outer surface, a frame (22) having a cavity (32)for receiving the coupling device and a retaining ring (26) with plurality of protruding teeth at the inner edge. The retaining ring is fittingly supported by an inner rim (34) of the frame. Thereby when, during operation, the outwardly extended fringe of the coupling device interacts with the protruding teeth of the retaining ring, the coupling device is firmly latched onto the frame.

## Description

### CROSS-REFERENCE TO RELATED APPLICATION

This application claims benefit under 35 U.S.C. § 119(b) of Hong Kong Short-term Patent having Patent No. HK1173029 (Application No. 13100451.7) filed on Jan. 11, 2013, which is hereby incorporated by reference herein in its entirety.

### FIELD OF INVENTION

This invention relates to a fastening apparatus; in particular a fastening apparatus for fastening the drawstring of a garment.

### BACKGROUND OF INVENTION

There are many situations that we need to fasten two objects together. For string-like objects, one general approach is to tie knots. However, knot-tying is a learnt skill which may not be intuitive for the uninitiated. Even though simple knots are easy to master, it nonetheless requires certain strength for a person to pull it tight. Hence, there is a need for an easy, fast and inexpensive device for fastening objects together.

### SUMMARY OF INVENTION

In the light of the foregoing background, it is an object of the present invention to provide an alternate fastening apparatus.

Accordingly, the present invention, in one aspect, is a fastening apparatus comprising a coupling device, a frame with a cavity for receiving the coupling device and a retaining ring. The coupling device further comprises at least one outwardly extended fringe which forms the widest part of the coupling device. And the retaining ring, supported by the inner rim of the frame, comprises a plurality of protruding teeth at the inner edge. When the outwardly extended fringe of the coupling device interacts with the protruding teeth of the retaining ring, the coupling device is firmly latched onto the frame.

In an exemplary embodiment of the present invention, the frame comprises a first opening being partially enclosed by an inwardly extended lip. The retaining ring is clamped between the inwardly extended lip and the inner rim of the frame.

In another exemplary embodiment of the present invention, the frame comprises a second opening which is configured to allow the coupling device to pass through the frame after the coupling device has been inserted into the frame.

In another exemplary embodiment of the present invention, the coupling device comprises a means for a strip to be attached with.

According to another aspect of the present invention, the retaining ring is made from elastic material, for example but not limited to stainless steel, brass and alloys. Therefore, the inner diameter of the aperture enclosed by the protruding teeth of the retaining ring can be enlarged by the fringe of the coupling device during its insertion into the frame such that the coupling device can pass through the retaining ring and enter into the cavity of the frame.

In a further aspect of the present invention, the protruding teeth of the retaining ring are configured to bend in one direction only. Therefore, the coupling device is latched onto the frame after the fringe of the coupling device passes through the protruding teeth of the retaining ring.

In another exemplary embodiment of the present invention, the fastening apparatus further comprises a releasing device which is configured to bend the protruding teeth and enlarge the inner diameter of the aperture. Thereby allowing the coupling device to escape from the frame.

In another exemplary embodiment of the present invention, the releasing device, comprising a hollow opening for the coupling device to pass through, is superimposed on the protruding teeth of the retaining ring.

The present invention provides a simple yet inexpensive way to tie two objects together. The user only needs to insert the coupling device to the frame to securely bind them into one piece. This is advantageous over knot-tying as the user can do it faster, without the need of twisting the strings in a specific pattern. Besides, the frame can be designed with an artistic appearance so the entire device can also serve as an esthetic ornament for garment in addition to its fastening function.

### BRIEF DESCRIPTION OF FIGURES

Figure 1 is a cross section diagram of a fastening apparatus according to an embodiment of the present invention.
Figure 2a is a cross sectional assembly diagram of a frame according to an embodiment of the present invention.
Figure 2b is a three-dimensional assembly diagram of a ring module of a fastening apparatus according to an embodiment of the present invention.
Figure 3a is a frontal view of a retaining ring according to an embodiment of the present invention.
Figure 3b is a frontal view of a retaining ring according to another embodiment of the present invention.
Figure 3c is a cross section diagram of a retaining ring, before and after bending, according to an embodiment of the present invention.
Figure 4 is a cross section diagram of a fastening apparatus during operation according to an embodiment of the present invention.
Figure 5 is a cross section diagram of a fastening apparatus with releasing device according to another embodiment of the present invention
Figure 6 is a cross section diagram of a fastening apparatus with two openings in the frame and two coupling devices according to another embodiment of the present invention.

### DETAILED DESCRIPTION OF THE PREFERRED EMBODIMENTS

As used herein and in the claims, "comprising" means including the following elements but not excluding others.

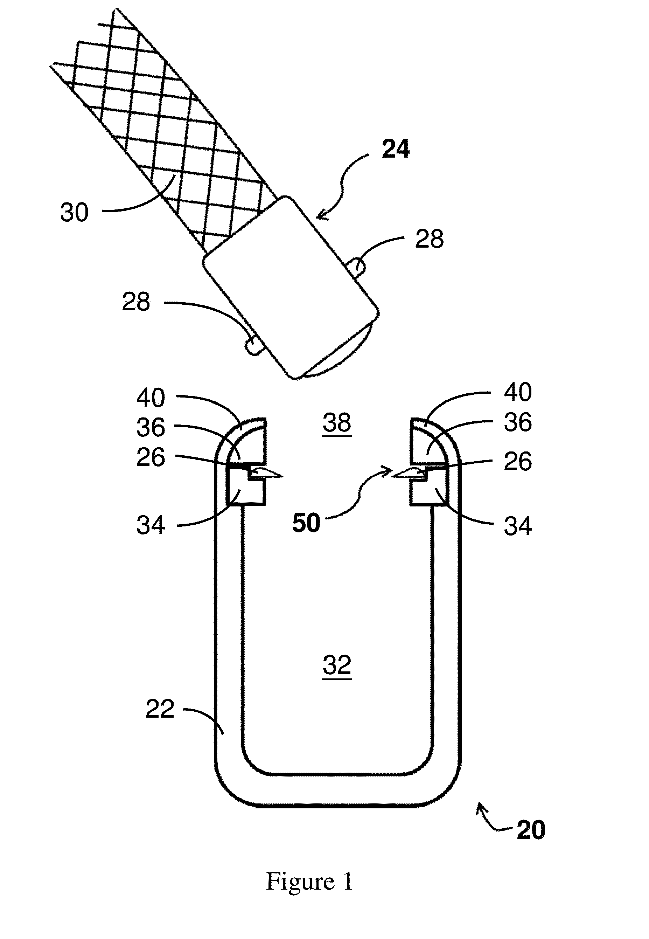

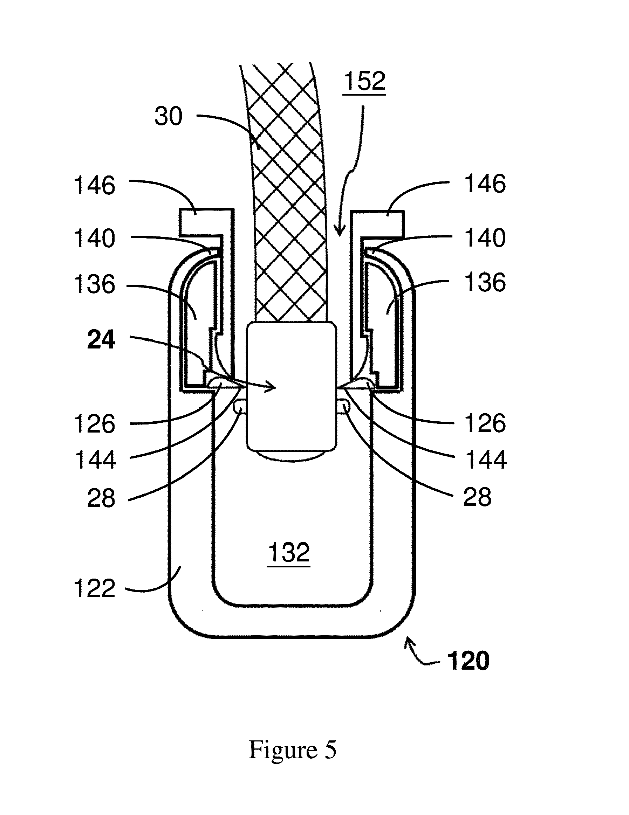

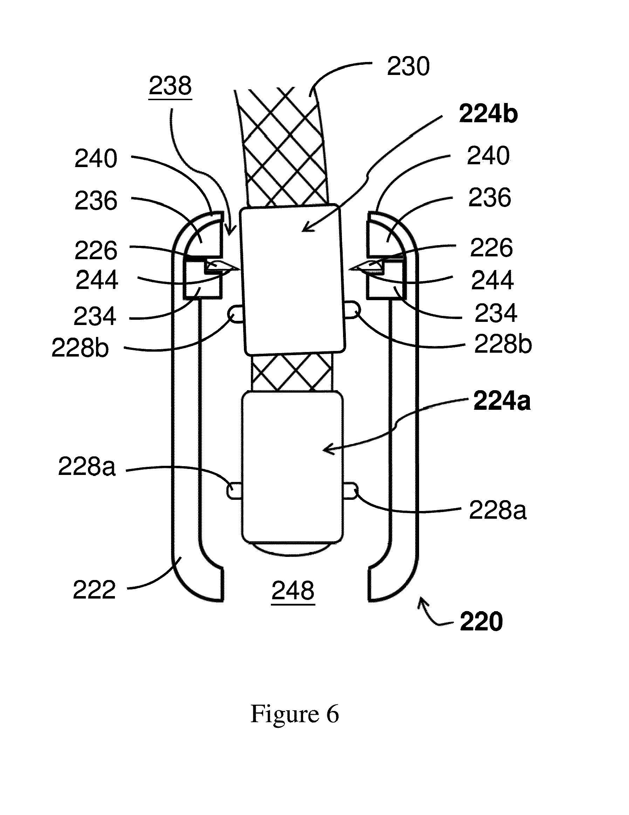

Three embodiments of the invention are disclosed, the first embodiment indicated by the numeral 20 in Figure 1, the second embodiment designated by the numeral 120 in Figure 5, and the third embodiment indicated by 220 in Figure 6.

### FIRST EMBODIMENT

Referring first to figure 1, the first embodiment of the present invention is a fastening apparatus 20 for fastening two objects together. In one embodiment, the fastening apparatus 20 comprise a frame 22, a coupling device 24 and a retaining ring 26. The coupling device 24 further comprises an outwardly extended fringe 28 and a means to attach a string or a strip 30. The frame 22 comprises an opening 38, which is partially enclosed by an inwardly extended lip 40, and a cavity 32 for receiving the coupling device 24. An inner rim support 34 and a supporting ring 36 are assembled together with the retaining ring 26 to form a ring module 50.

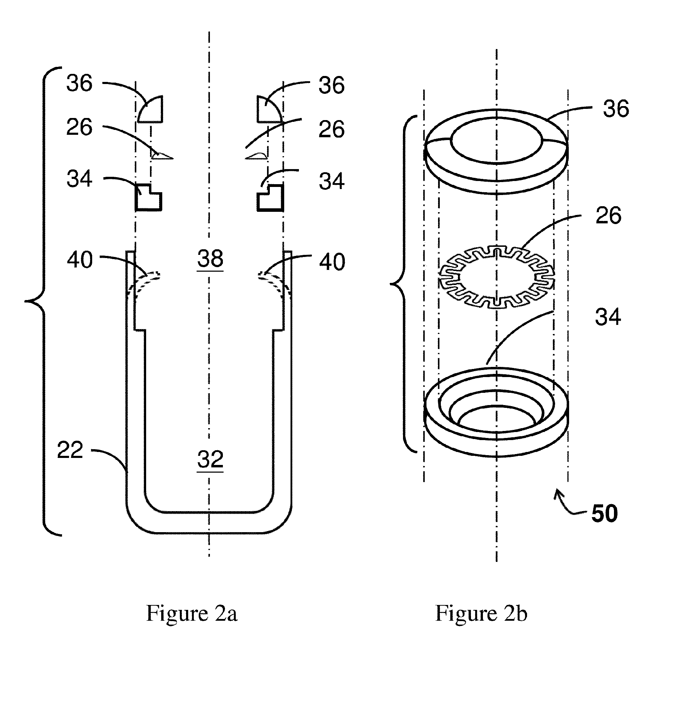

Referring to figure 2a and 2b, the ring module 50 is assembled with retaining ring 26 placed in between the inner rim support 34 and the supporting ring 36 in this embodiment. The edge of the frame 22 is bent to form the inwardly extended lip 40 after the ring module 50 is placed inside the cavity 32 of the frame 22 so that the retaining ring 26 is firmly settled and supported in the desirable position, i.e. nearly positioned in the opening 38 of the frame 22 in this embodiment.

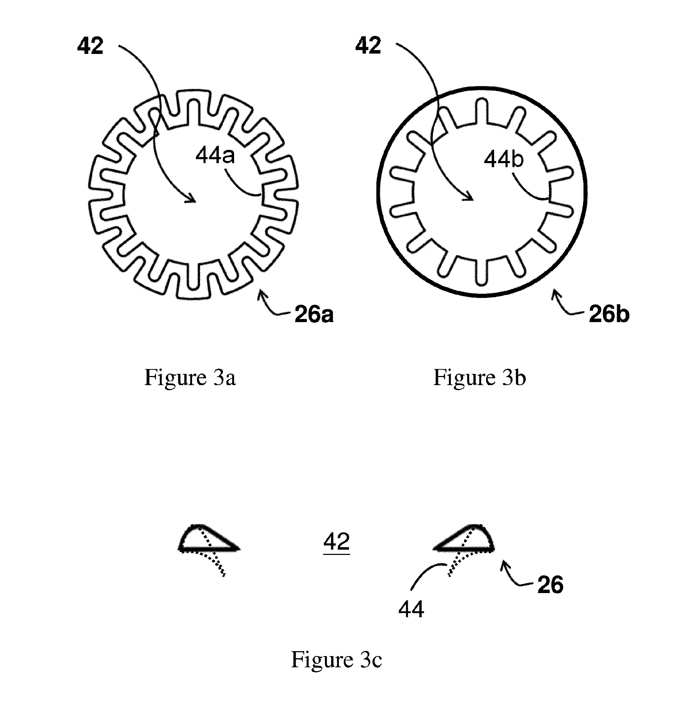

As illustrated by figure 3a, the retaining ring 26 in this embodiment is in the shape of a crenellated ring 26a with plurality of merlons functioning as protruding teeth 44a. In yet another embodiment, the retaining ring 26 is in the shape of circular ring 26b with plurality of protruding teeth 44b at the inner edge of the retaining ring 26b, as illustrated by figure 3b. The retaining ring 26 is of skew shape in the present embodiment; with thinner thickness at the inner edge. As such the protruding teeth 44 of the retaining ring 26 are configured to bend in a single direction only. When the protruding teeth 44 are bent, the inner diameter of the retaining ring 26, which is also referred as the diameter of aperture 42, is enlarged as shown in figure 3c. In one embodiment, the retaining ring is made of elastic materials, for example stainless steel, brass and alloys.

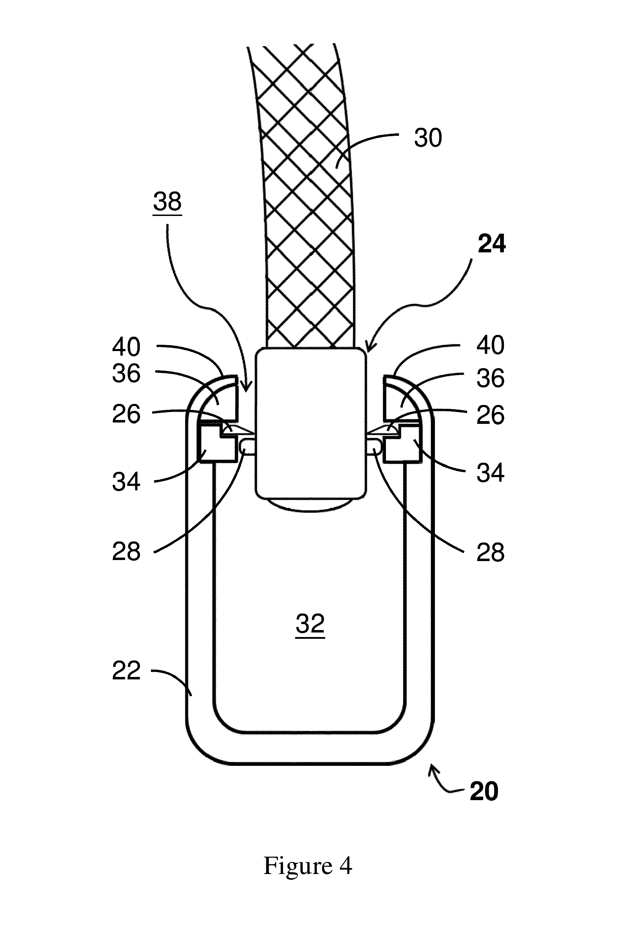

Now turning to the operation of the fastening apparatus described above, figure 4 shows how the coupling device 24 is latched onto the frame 22. In this embodiment, the widest part of the coupling device 24, defined by the width of the outwardly extended fringe 28, is larger than the inner diameter of the aperture 42 enclosed by the protruding teeth 44 of retaining ring 26, but smaller than the inner diameter of the aperture 42 after the bending of the protruding teeth 44. When the coupling device 24 is inserted into the frame 22, the outwardly extended fringe 28 of the coupling device 24 is pushed against the retaining ring 26 causing the protruding teeth 44 to bend. This enlarges the inner diameter of the aperture 42 to allow even the widest part of the coupling device 24 to pass through the retaining ring 26 and enter into the cavity 32 of the frame 22. Once the coupling device 24 enters the cavity 32 of the frame 22, the protruding teeth 44 of the retaining ring 26 will return to its original state dues to its own elasticity. As such the diameter of the aperture 42 becomes smaller than the width of the outwardly extended fringe 28 again; and the coupling device 24 cannot be retrieved from the frame 22. As a result, the coupling device 24 cannot escape from the frame 22 after the insertion because the protruding teeth 44 are configured to bend inwardly towards to cavity 32 only.

### SECOND EMBODIMENT

Now referring to Figure 5, the second embodiment of the present invention is a fastening apparatus specifically designed such that the coupling device 24 is releasable after being latched onto the cavity 132 of the frame 122.

In this embodiment, the fastening apparatus 120 comprises a frame 122, a coupling device 24, a retaining ring 126 and a releasing device 146. The supporting ring 136 is firmly clamped by the inwardly extended lips 140 of the frame 122 to hold the retaining ring 126 in a desirable position inside the cavity 132 of the frame 122. Moreover, the supporting ring 136 is configured to fittingly adapt to the releasing device 146 such that the releasing device 146 is latched onto the supporting ring 126 once it is inserted into the frame 122. In this embodiment, the releasing device 146 is superimposed on the protruding teeth 144 of the retaining ring 126.

The widest part of the coupling device 24 in this embodiment is larger than the aperture enclosed by the protruding teeth 144 of the retaining ring 126, but smaller than the aperture after the bending of the protruding teeth 144. It should be noticed that the widest part of the coupling device 24 is also smaller than the inner diameter of the opening 152 of the releasing device 146 such that the coupling device 24 can pass through the releasing device 146. The retaining ring 126 is made of elastic material and the protruding teeth 144 are configured to bend inwardly towards the cavity 132 of the frame 122 only. Therefore when, during operation, the outwardly extended fringe 28 of the coupling device 24 is pushed again the retaining ring 126, the protruding teeth 44 are bent so that the aperture diameter of the protruding teeth is enlarged to allow the coupling device 24 enters the cavity 132 of the frame 122.

In case the user wants to release the coupling device 24 from the frame 122, the releasing device 146 is pushed against the retaining ring 126. The protruding teeth 144 of the retaining ring 126 are bent again and the aperture enclosed by the protruding teeth 144 is enlarged accordingly. When the aperture diameter is larger than the widest part of the coupling device 24, defined by the width of the outwardly extended fringe 28, the coupling device 24 can then be pulled back and disengaged from frame 122. When the force applied on the releasing device 146 is released, the retaining ring 126 and the releasing device 146 return to their original state due to the elasticity of the retaining ring 126.

### THIRD EMBODIMENT

In yet another embodiment, as illustrated in figure 6, the fastening apparatus 220 is designed such that the fastening position and fastening strength can be adjusted. In one embodiment, the fastening apparatus 220 comprises a frame 222, two coupling devices 224a and 224b and a retaining ring 226. Both coupling 224a and 224b comprises outwardly extended fringes and their means for strip 230 to attach with. The first opening 238 of the frame 222 is partially enclosed by an inwardly extended lip 240. The inwardly extended lip 240 is bent against the supporting ring 236 to firmly hold the retaining ring 226 in the desirable position, i.e. near the first opening 238 of the frame 222. The second opening 248 is located opposite to the first opening 238 in this embodiment.

The retaining ring 226 is made of elastic materials and the protruding teeth 244 are configured to bend inwardly only. Moreover, the widest part of the each coupling device 224a or 224b, defined by the width of the corresponding outwardly extended fringe 228a or 228b, is larger than the aperture enclosed by the protruding teeth 244 of retaining ring 226, but smaller than the aperture after the bending of the protruding teeth 244. During the operation, the outwardly extended fringe 228a of the coupling device 224a is pushed against the retaining ring 226 causing the protruding teeth 44 to bend. Once the outwardly extended fringe 228a of the coupling device 224a passes through the retaining ring 226, the coupling device 224a is latched onto the frame 222. In case greater fastening strength is desired, the coupling device 224b is also pushed against the retaining ring 226 and enters the cavity of the frame 222. As the length of the strip 230 is shorten by latching the coupling device 224b onto the frame 222, a greater fastening strength can therefore be achieved.

In a further embodiment, the same releasing device 146 as shown in figure 5 can also be incorporated in the frame 222 of figure 6 so that the strip 230 can be released from the frame in a similar way as described above in the second embodiment.

Although two coupling devices 224a and 224b are shown in figure 6, there can be more than two of these devices cascading together, so as to provide more choices of fastening positions and fastening strengths to the user. In yet another embodiment, a single coupling device such as 224a can accommodate more than one outwardly extended fringes 228a or 228b. Furthermore, the coupling devices 224a and 224b, as well as the strip 230 that attaches to these device, can be extended to pass the opening 248 of the frame if need be.

The exemplary embodiments of the present invention are thus fully described. Although the description referred to particular embodiments, it will be clear to one skilled in the art that the present invention may be practiced with variation of these specific details. Hence this invention should not be construed as limited to the embodiments set forth herein.

For example, the inner rim support and supporting ring may be fused to the inner wall of the frame in one embodiment. So the number of assembling parts can be minimized. Moreover, the shape of the retaining ring is described as round in above embodiments, but it is clear that other shapes and sizes such as oval, quadrilateral, or polygonal may be used. Furthermore, the teeth of the retaining ring are of quadrilateral shape as described in the above embodiments. In yet another embodiment, the teeth are of triangular shape.

The number of coupling devices and retaining rings contained inside the fastening apparatus shouldn't be limited by the above description also. In another embodiment, the coupling device may comprise plurality of outwardly extended fringes for fine adjustment of fastening strength and fastening position. In yet another embodiment, the fastening apparatus may comprise plurality of retaining rings for fine adjustment of fastening strength and position also.

Moreover, in another embodiment, another strip can be attached by any conventional means to the frame of the fastening apparatus for tying two strips together. Combining with a coupling device with multiple outwardly extended fringes, in yet another embodiment, the fastening strength of two strips can therefore be adjusted via fastening the coupling device in different positions. The strip can be made of cloth material, plastic or rubber.

## Claims

1. A fastening apparatus comprising
a) a coupling device comprising at least one fringe extended outwardly from the outer surface, wherein said at least one fringe forms the widest part of said coupling device;
b) a frame having a cavity therein for receiving said coupling device; and
c) a retaining ring comprising a plurality of protruding teeth at the inner edge of said retaining ring; said retaining ring fittingly supported by an inner rim of said frame wherein said at least one fringe of said coupling device interacts with said protruding teeth of said retaining ring when said coupling device is inserted into said frame so that said coupling device is firmly latched onto said frame.

2. The fastening apparatus according to claim 1, wherein said frame comprises a first opening being partially enclosed by an inwardly extended lip; said retaining ring being clamped between said inwardly extended lip and said inner rim of said frame.

3. The fastening apparatus according to claim 2, wherein said frame further comprises a second opening thereby allowing said coupling device to pass through said frame after said coupling device is inserted into said frame.

4. The fastening apparatus according to claim 1, wherein said coupling device further comprises a means being configured to attach with a strip.

5. The fastening apparatus according to claim 1, wherein said retaining ring is made from elastic material, selected from the group consisting of stainless steel, brass and alloys.

6. The fastening apparatus according to claim 1, wherein said protruding teeth of said retaining ring is configured such that an aperture with an inner diameter is smaller than said widest part of said coupling device
wherein when said coupling device is inserted into said frame, said protruding teeth of said retaining ring is configured to bend to enlarge said inner diameter of said aperture is enlarged thereby allowing said coupling device to pass through

7. The fastening apparatus according to claim 6, wherein said protruding teeth of said retaining ring is configured to bend in one direction only such that said coupling device is latched onto said frame after said at least one fringe of said coupling device passes through said protruding teeth of said retaining ring.

8. The fastening apparatus according to claim 7 further comprises a releasing device, wherein said releasing device being configured to bend said protruding teeth of said retaining ring to enlarge said inner diameter of said aperture thereby allowing said coupling device to escape from said frame.

9. The fastening apparatus according to claim 8, wherein said releasing device being superimposed on said protruding teeth of said retaining ring.

10. The fastening apparatus according to claim 9, wherein said releasing device further comprises a hallow opening allowing said coupling device to pass therethrough.
